# FASCICULE DE BREVET EUROPEEN

(11) **EP 1 439 301 B1**
(45) Date de publication et mention de la délivrance du brevet: **09.07.2008**
(21) Numéro de dépôt: 04290099.3
(22) Date de dépôt: 14.01.2004
(51) Int. Cl.: F02F 3/00, F02F 3/26, F16J 1/16, B22D 19/00

(54) **Piston comportant un insert en alliage d'aluminium et procédé pour sa fabrication**
Kolben mit einem Aluminium-Einsatzstück und Verfahren zur seiner Herstellung
Piston with an aluminium insert and method for making same

(30) Priorité: 14.01.2003 FR 0300334
(43) Date de publication de la demande: 21.07.2004
(73) Titulaire: RENAULT S.A.S., 92100 Boulogne Billancourt (FR)
(72) Inventeur: Grazzini, Herbert, 92340 Bourg La Reine (FR); Ravary, Serge, 78960 Voisins le Bretonneux (FR)

(56) Documents cités:
- EP-A- 0 033 989
- EP-A- 0 640 759
- DE-A- 3 733 910
- DE-A- 10 042 207
- US-A- 3 789 743

## Description

La présente invention concerne un piston moulé en alliage d'aluminium et un procédé pour sa fabrication.

La présente invention concerne plus particulièrement un piston moulé en alliage d'aluminium pour un moteur à combustion interne, qui coulisse axialement dans un cylindre du moteur en décrivant un mouvement de va-et-vient, qui comporte une tête dans son tronçon supérieur et une jupe axiale dans son tronçon inférieur, qui est relié à une bielle par une articulation comportant un axe qui est monté, par ses deux tronçons d'extrémité axiale, respectivement dans deux logements d'axe réalisés dans des bossages associés formés sur la paroi interne du piston.

Le piston d'un moteur à combustion interne transmet l'effort résultant de la pression de combustion au vilebrequin du moteur par l'intermédiaire d'une bielle, qui est reliée au piston par un axe.

La zone de contact entre le piston et l'axe est fortement sollicitée mécaniquement. C'est dans cette zone que se concentre l'essentiel des contraintes résultant de la pression de combustion. Cette zone est donc renforcée au moyen de bossages permettant d'augmenter la surface de contact entre l'axe et le piston.

Afin de réduire le poids du piston, celui-ci est le plus souvent réalisé en alliage léger à base d'aluminium et de silicium (alliage AlSi).

Les caractéristiques mécaniques de ce type d'alliage couié sous gravité se dégradent fortement lorsque la température du piston est très élevée. Or le piston est directement exposé aux gaz de combustion et il n'est pas refroidi par eau. Par conséquent, les températures atteintes en fonctionnement sont souvent critiques du point de vue de la tenue mécanique des bossages d'axe.

Actuellement, la solution la plus répandue pour augmenter l'effort transmissible par le piston à l'axe consiste à modifier la forme de l'alésage délimitant le logement d'axe.

Par exemple, le document DE-A-3.301.366 propose de réaliser un alésage de forme globalement tronconique de manière à améliorer la répartition des pressions de contact entre le piston et l'axe sur toute la longueur de l'alésage.

Le document US-A-5.653.156 et le document EP-A-0.254.340 proposent de réaliser un alésage de forme complexe, qui comporte notamment des encoches, de manière à améliorer la lubrification du logement d'axe.

Ces modifications de la forme du logement d'axe ont toutefois une efficacité limitée.

Une solution plus efficace, qui est décrite notamment dans le document DE-A-3.932.563, consiste à fretter dans le logement d'axe des bagues réalisées dans un matériau présentant de bonnes caractéristiques mécaniques et de bonnes caractéristiques de lubrification. Ces bagues sont réalisées généralement en bronze ou en laiton.

Cette solution n'est pas totalement satisfaisante car elle rend la fabrication du piston plus complexe. De plus, les matériaux utilisés généralement pour réaliser les bagues sont difficiles à usiner, et ils ont une densité élevée, ce qui augmente le poids du piston.

D'autres solutions ont été proposées, qui visent à améliorer la tenue mécanique des bossages d'axe au moyen d'inserts situés dans la partie supérieure des bossages.

Les documents DE-A-3.639.806 et DE-A-196.50.930 proposent d'insérer à la coulée des inserts en céramique (AL203).

Le document DE-A-3.733.910 propose de rapporter sur le piston, par soudage ou par friction, un insert métallique à haute résistance mécanique.

Les solutions proposées par ces trois documents ne sont pas satisfaisantes, car elles présentent un coût élevé en raison de la complexité des opérations de fabrication nécessaires pour leur mise en ceuvre.

L'agencement d'inserts en céramique nécessite un « forgeage liquide », c'est à dire un moulage du piston par coulée sous haute pression, de manière à forcer la pénétration de l'alliage d'aluminium dans l'insert qui est poreux.

L'agencement d'inserts métalliques rapportés constitue une opération d'assemblage supplémentaire dans la fabrication du piston.

De plus, ces solutions nécessitent de réaliser les logements d'axe par usinage dans un matériau hétérogène, constitué par le matériau du piston et le matériau de l'insert.

De par leur densité, les inserts métalliques rapportés entraînent une augmentation du poids du piston.

L'invention vise à remédier à ces inconvénients en proposant une solution fiable, simple, efficace, et économique.

Dans ce but, l'invention propose un piston moulé en alliage d'aluminium pour un moteur à combustion interne selon la revendication 1.

Selon d'autres caractéristiques de l'invention :
- l'insert est réalisé en un alliage d'aluminium dont la teneur en silicium est comprise entre douze et quarante pourcents en poids ;
- l'axe de l'alésage de chaque insert est déporté vers le bas d'une distance déterminée par rapport à l'axe de l'insert du logement d'axe associé.

L'invention concerne aussi un procédé de fabrication d'un piston selon la revendication 4.

Selon d'autres caractéristiques du procédé selon l'invention :
- les alésages des inserts sont usinés après le surmoulage ;
- le piston est réalisé par moulage sous gravité ;
- le piston est réalisé par moulage sous pression.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe axiale 1-1 qui représente schématiquement un piston réalisé conformément aux enseignements de l'invention ;
- la figure 2 est une demi vue en coupe axiale et transversale 2-2 qui représente schématiquement le piston de la figure 1.

Dans la description qui va suivre, des éléments identiques, similaires ou analogues seront désignés par les mêmes chiffres de référence.

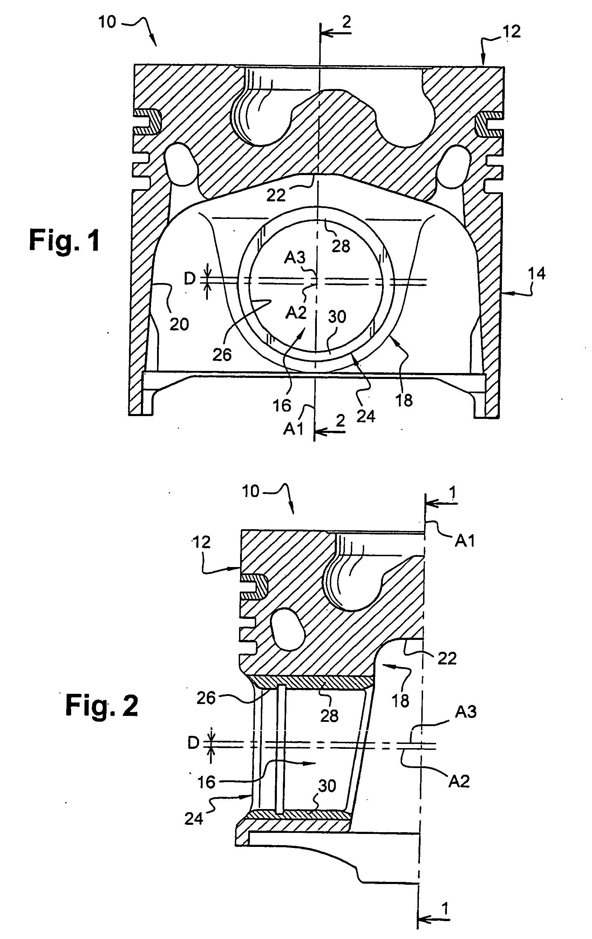

On a représenté schématiquement, sur les figures 1 et 2, un piston 10 moulé en alliage d'aluminium pour un moteur à combustion interne.

Le piston 10 est donc prévu pour coulisser axialement (A1) dans un cylindre (non représenté) du moteur en décrivant un mouvement de va-et-vient.

Dans la suite de la description, on utilisera à titre non limitatif une orientation axiale verticale suivant l'axe A1 du piston 10, qui correspond à l'orientation des figures 1 et 2.

Le piston 10 comporte une tête 12 dans son tronçon supérieur et une jupe axiale 14 dans son tronçon inférieur.

Le piston 10 est prévu pour être relié à une bielle (non représentée) par une articulation (A2) comportant un axe transversal (non représenté) qui est monté à rotation dans une extrémité de la bielle et qui est monté tourillonnant, par ses tronçons d'extrémité axiale, dans deux logements d'axe 16 du piston 10, diamétralement opposés par rapport à l'axe A1 du piston 10.

Dans la suite de la description, on utilisera à titre non limitatif une orientation transversale suivant l'axe A2 de l'articulation du piston 10.

Les logements d'axe 16 sont réalisés dans deux bossages d'axe 18 qui sont formés par moulage avec la paroi interne 20 de la jupe 14 du piston 10 et avec la face inférieure 22 de la tête 12 du piston 10.

Les logements d'axe 16 sont alignés par ieurs axes suivant une direction transversale A3 qui est parallèle à l'axe A2 de l'articulation.

Conformément aux enseignements de l'invention, chaque logement d'axe 16 comporte un insert 24 globalement annulaire cylindrique, en forme de bague, qui délimite un alésage 26 prévu pour recevoir un tronçon d'extrémité associé de l'axe. Chaque alésage 26 est donc coaxial à la direction transversale A2 de l'articulation.

L'insert 24 est réalisé en alliage d'aluminium à hautes performances mécaniques. De préférence, l'alliage utilisé pour fabriquer l'insert 24 est un alliage d'aluminium qui a une teneur élevée en silicium, par exemple comprise entre douze et quarante pourcents en poids du matériau, ce qui garantit une bonne tenue mécanique de l'alliage, malgré les très hautes températures auxquelles est soumis le piston 10.

Un exemple d'alliage d'aluminium à hautes performances mécaniques est, par exemple, un d'alliage d'aluminium densifié par atomisation, tel que celui qui est décrit dans le document EP-B-0.640.759, dans lequel un composant comprend un renfort qui est réalisé dans un tel type d'alliage.

Conformément aux enseignements de l'invention, l'insert 24 est inséré à la coulée, lors du moulage du piston 10.

Le moulage du piston 10 peut être réalisé par gravité ou sous pression.

De préférence, l'alésage 26 de chaque insert 24 est usiné après le surmoulage du piston 10 autour de l'insert 24, ce qui garantit un bon alignement des deux alésages 26 suivant la direction transversale A2.

L'usinage se fait donc dans un matériau homogène puisque seuls les inserts 24 sont usinés.

Avantageusement, l'axe transversal A2 des alésages 26 est légèrement déporté axialement (A1) vers le bas, d'une distance déterminée D, par rapport à la direction transversale A3 définie par les logements d'axe 16. Du fait de ce déport, qui peut avoir par exemple une valeur maximale de deux millimètres, chaque insert 24 possède une portion de paroi 28 d'épaisseur plus importante au-dessus de l'axe A2, que la portion de paroi 30 située au-dessous de l'axe A2.

La portion de paroi 28 située au-dessus de l'axe A2 est celle qui est la plus sollicitée mécaniquement, puisque c'est la plus proche de la tête 12 du piston 10. L'épaisseur plus importante de cette portion de paroi 28 lui permet de mieux résister à ces sollicitations.

Le piston 10 obtenu selon les enseignements de l'invention présente une meilleure résistance mécanique, notamment au niveau des logements d'axe 16.

Grâce aux enseignements de l'invention, on obtient une bonne liaison métallique entre le piston 10 et les inserts 24. En effet, le surmoulage du piston 10 autour d'inserts 24 en alliage d'aluminium densifié par atomisation provoque une « re-fusion » locale de chaque insert 24 pendant la coulée, lors du moulage du piston 10.

On note que les caractéristiques de l'invention peuvent être combinées avec les différentes formes d'alésage 26 possibles pour chaque logement d'axe 16, telles que celles qui sont décrites dans les documents cités dans le préambule de la présente description. En particulier, chaque alésage 26 peut être de forme tronconique et/ou comporter des encoches favorisant sa lubrification.

## Revendications

1. Piston (10) moulé en alliage d'aluminium pour un moteur à combustion interne, qui coulisse axialement dans un cylindre du moteur en décrivant un mouvement de va-et-vient, qui comporte une tête (12) dans son tronçon supérieur et une jupe axiale (14) dans son tronçon inférieur, qui est relié à une bielle par une articulation (A2) comportant un axe qui est monté, par ses deux tronçons d'extrémité axiale, respectivement dans deux logements d'axe (16) réalisés dans des bossages (18) associés formés sur la paroi interne (20) du piston (10),
**caractérisé en ce que** chaque logement d'axe (16) comporte un insert (24) globalement annulaire cylindrique qui délimite un alésage (26) prévu pour recevoir un tronçon d'extrémité associé de l'axe et qui est réalisé en alliage d'aluminium et de silicium densifié par atomisation, et **en ce que** l'insert (24) est inséré à la coulée, lors du moulage du piston (10).

2. Piston (10) selon la revendication précédente, **caractérisé en ce que** l'insert (24) est réalisé en un alliage d'aluminium dont la teneur en silicium est comprise entre douze et quarante pourcents en poids.

3. Piston (10) selon l'une quelconque des revendications précédentes, **caractérisé en ce que** l'axe (A2) de l'alésage (26) de chaque insert (24) est déporté vers le bas d'une distance (D) déterminée par rapport à l'axe (A3) de l'insert (24) du logement d'axe (16) associé.

4. Procédé de fabrication d'un piston (10) selon l'une quelconque des revendications précédentes, **caractérisé en ce qu'**il comporte les étapes successives suivantes :
- réalisation d'un insert annulaire cylindrique (24) en alliage d'aluminium et de silicium densifié par atomisation pour chaque logement d'axe (16),
- insertion des inserts (24) dans un moule pour piston (10),
- réalisation du piston (10) en alliage d'aluminium par surmoulage autour des inserts (24).

5. Procédé selon la revendication précédente, **caractérisé en ce que** les alésages (26) des inserts (24) sont usinés après le surmoulage.

6. Procédé selon la revendication 4 ou 5, **caractérisé en ce que** le piston (10) est réalisé par moulage sous gravité.

7. Procédé selon la revendication 4 ou 5, **caractérisé en ce que** le piston (10) est réalisé par moulage sous pression.

## Claims

1. Piston (10) cast in aluminium alloy and intended for an internal combustion engine, which piston slides axially in a cylinder of the engine while describing a reciprocating movement, comprises a head (12) in its upper portion and an axial skirt (14) in its lower portion, and is coupled to a connecting rod by an articulation (A2) comprising a pin which is mounted by way of its two axial end portions in two respective pin housings (16) provided in associated bosses (18) formed on the inside wall (20) of the piston (10), **characterized in that** each pin housing (16) comprises a wholly cylindrical annular insert (24) which defines a bore (26) intended to accommodate an associated end portion of the pin and which is made of a spray-consolidated aluminium/silicon alloy, and **in that** the insert (24) is inserted within the casting in the course of casting the piston (10).

2. Piston (10) according to the preceding claim, **characterized in that** the insert (24) is made of an aluminium alloy whose silicon content is between twelve and forty per cent by weight.

3. Piston (10) according to either one of the preceding claims, **characterized in that** the axis (A2) of the bore (26) of each insert (24) is offset downwardly by a predetermined distance (D) with respect to the axis (A3) of the insert (24) of the associated pin housing (16).

4. Method of making a piston (10) according to any one of the preceding claims, **characterized in that** it comprises the following successive steps:
- producing for each pin housing (16) a cylindrical annular insert (24) made of a spray-consolidated aluminium/silicon alloy,
- inserting the inserts (24) into a mould for a piston (10),
- producing the aluminium alloy piston (10) by overcasting around the inserts (24).

5. Method according to the preceding claim, **characterized in that** the bores (26) of the inserts (24) are machined following the overcasting operation.

6. Method according to Claim 4 or 5, **characterized in that** the piston (10) is produced by gravity die-casting.

7. Method according to Claim 4 or 5, **characterized in that** the piston (10) is produced by pressure die-casting.

## Patentansprüche

1. Kolben (10), der aus einer Aluminiumlegierung gegossen ist, für eine Brennkraftmaschine vorgesehen ist, axial in einem Zylinder der Maschine gleitet und dabei eine Hin- und Herbewegung beschreibt und einen Kopf (12) in seinem oberen Teilstück und einen axialen Mantel (14) aufweist, wobei das untere Teilstück durch ein Gelenk (A2) mit einer Pleuelstange verbunden ist, wobei das Gelenk eine Welle besitzt, die über ihre beiden axialen Endteilstücke in zwei Wellenaufnahmesitzen (16) angebracht ist, die in zugeordneten Erhebungen (18) verwirklicht sind, die an der Innenwand (20) des Kolbens (10) ausgebildet sind,
**dadurch gekennzeichnet, dass** jeder Wellenaufnahmesitz (16) einen im Wesentlichen zylindrischen ringförmigen Einsatz (24) aufweist, der eine Bohrung (26) begrenzt, die dazu vorgesehen ist, ein Endteilstück der Welle aufzunehmen, und aus einer Legierung aus Aluminium und Silicium, die durch Zerstäubung vergütet worden ist, verwirklicht ist, und dass der Einsatz (24) im Schmelzvorgang beim Gießen des Kolbens (10) eingesetzt worden ist.

2. Kolben (10) nach dem vorhergehenden Anspruch, **dadurch gekennzeichnet, dass** der Einsatz (24) aus einer Aluminiumlegierung verwirklicht ist, deren Siliciumgehalt im Bereich von zwölf bis vierzehn Gewichtsprozent liegt.

3. Kolben (10) nach einem der vorhergehenden Ansprüche, **dadurch gekennzeichnet, dass** die Achse (A2) der Bohrung (26) jedes Einsatzes (24) in Bezug auf die Achse (A3) des Einsatzes (24) des zugeordneten Wellenaufnahmesitzes (16) um eine bestimmte Strecke (D) nach unten versetzt ist.

4. Verfahren zum Herstellen eines Kolbens (10) nach einem der vorhergehenden Ansprüche, **dadurch gekennzeichnet, dass** es die folgenden aufeinander folgenden Schritte enthält:
- Verwirklichen eines zylindrischen ringförmigen Einsatzes (24) aus einer Legierung aus Aluminium und Silicium, die durch Zerstäubung vergütet ist, für jeden Wellenaufnahmesitz (16),
- Einsetzen der Einsätze (24) in eine Gießform für den Kolben (10),
- Verwirklichen des Kolbens (10) aus einer Aluminiumlegierung durch Gießen um die Einsätze (24).

5. Verfahren nach dem vorhergehenden Anspruch, **dadurch gekennzeichnet, dass** die Bohrungen (26) der Einsätze (24) nach dem Umgießen bearbeitet werden.

6. Verfahren nach Anspruch 4 oder 5, **dadurch gekennzeichnet, dass** der Kolben (10) durch Gießen unter Schwerkraft verwirklicht wird.

7. Verfahren nach Anspruch 4 oder 5, **dadurch gekennzeichnet, dass** der Kolben (10) durch Gießen unter Druck verwirklicht wird.
